# EUROPEAN PATENT APPLICATION

(11) **EP 1 744 142 A1**
(43) Date of publication of application: **17.01.2007**
(21) Application number: 06090123.8
(22) Date of filing: 12.07.2006
(51) Int. Cl.: G01N 9/00

(54) **Apparatus and method for measuring fluid density**

(30) Priority: 12.07.2005 US 180058; 13.09.2005 US 226859
(71) Applicant: Calibron Systems, Inc., Scottsdale AZ 85260-3405 (US)
(72) Inventor: Francisco, Edward E. Jr., Scottsdale, Arizona 95260-3405 (US); McGlynn, Tim A., Scottsdale, Arizona 95260-3405 (US)
(74) Representative: Müller, Wolfram Hubertus

(57) **Abstract**

Method and apparatus for measuring fluid density in a fluid system has a sheath that surrounds a vibrating tube. The sheath and the tube form a cavity filled with a fixed amount of fluid. A pressure compensating element has a housing in which first and second pressure responsive surfaces are disposed. The first surface is in fluid communication with the cavity and the second surface is in fluid communication with the housing. A passage extends between the interior of the tube and the interior of the housing to exert the tube pressure on the second surface. The pressure on the second surface is transmitted to the cavity by the element to compensate for changes in the tube pressure.

## Description

### CROSS-REFERENCE TO RELATED APPLICATION

This application is a continuation-in-part of Application No. 11/180,058, filed July 12, 2005, which is incorporated fully herein by reference.

This application is related to U.S. patent No. 6,732,570, which issued on May 11, 2004, The disclosure of this patent is incorporated fully herein by reference.

### BACKGROUND OF THE INVENTION

This invention relates to measurement of fluid density.

Apparatus for measuring fluid density is called a densimeter. Densimeters are used in chemical processes, pipe lines, and food processing plants and other similar applications.

One type of densimeter measures the resonant frequency of a vibrating, fluid carrying tube. The resonant frequency of the tube is dependent upon the density of the fluid passing through it. Unfortunately, the resonant frequency is also dependent upon pressure induced stresses in the tube 14, which represent error in the measurement.

### SUMMARY OF THE INVENTION

One aspect of the invention is apparatus for measuring fluid density in a fluid system. A sheath surrounds a vibrating tube. The sheath and the tube form a cavity filled with a fixed amount of fluid. A pressure compensating element has a housing in which first and second pressure responsive surfaces are disposed. The first surface is in fluid communication with the cavity and the second surface is in fluid communication with the housing. A passage extends between the interior of the tube and the interior of the housing to exert the tube pressure on the second surface. The pressure on the second surface is transmitted to the cavity by the element to compensate for changes in the tube pressure.

Another aspect of the invention is a method of compensating for line pressure changes in a densimeter that has a vibrating tube to sense density. A fixed amount of fluid fills a cavity formed around the tube. A first pressure responsive surface is in fluid communication with the cavity and a second fluid responsive surface is in fluid communication with the tube. The pressure on the second surface is transmitted to the cavity to compensate for changes in the tube pressure.

### BRIEF DESCRIPTION OF THE DRAWINGS

The features of specific embodiments of the best mode contemplated of carrying out the invention are illustrated in the drawings, in which:
FIG. 1 is a schematic block diagram of a vibrating tube densimeter;
FIG. 2A to 2D are respectively top plan, side plan, end plan, and perspective views of a vibrating tube densimeter incorporating the principles of the invention; and
FIG. 3A to 3C are, respectively, side sectional, cross sectional, and enlarged cross sectional views of the densimeter of FIG. 2A to 2D

### DETAILED DESCRIPTION OF A SPECIFIC EMBODIMENT

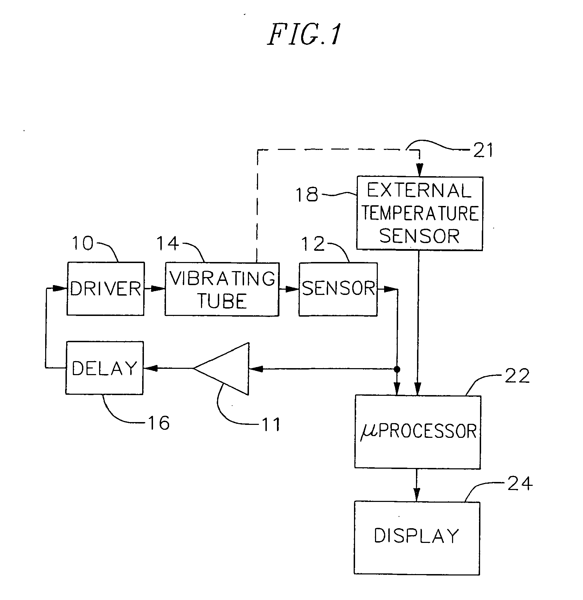

In FIG. 1 a driver 10 and a sensor 12 are mounted on the exterior wall of a vibrating tube 14. Tube 14 is installed in a flowing fluid system (not shown) such as a chemical plant, a refinery, or a food processing plant. Tube 14 could be directly installed in the fluid system so all the fluid flows through tube 14 or could be installed as a probe in the manner illustrated in US Patent 5,974,858, which issued on November 2, 1999, the disclosure of which is incorporated herein by reference. The output of sensor 12 is coupled by an amplifier 11 to driver 10 in a feedback loop that also includes a delay 16. Typically, driver 10 and sensor 12 are piezoelectric or magnetic devices. By virtue of the feedback loop from sensor 12 to driver 10, tube 14 vibrates at its resonant frequency or a harmonic thereof. Amplifier 11 provides the power for these vibrations. The phase shift from the output of sensor 12 to the input of driver 10 depends in part on the relative circumferential positioning of driver 10 and sensor 12. The mode of vibration, i.e., axial or radial, depends upon the conditions established in the feedback loop such as the relative positioning of driver 10 and sensor 12. If tube 14 has a large diameter (e.g., larger than one inch), the resonant frequency in the radial direction is used to measure the density, because otherwise the tube 14 must be too long to keep the resonant frequencies of 1500 to 4500 Hz. In this case, If tube 14 has a small diameter (e.g., one inch or less), resonant frequency in the axial direction is used to measure the density, because otherwise the tube 14 must be too long, and typical resonant frequencies are in the range of 1000 to 1500 Hz. The described components are analogous to an electrical oscillator; the mass and spring constant of tube 14 are analogous to the tank circuit of the oscillator. Delay 16 is designed to create regenerative feedback. Delay 16 represents delay caused by the relative positioning of driver 10 and sensor 12 around the circumference of tube 14 and/or an electrical delay in the feedback loop. As is known in the art, the resonant frequency of tube 14 depends upon the tube mass, spring constant, the density of the fluid traveling through tube 14 , the temperature of the fluid inside tube 14. As represented by a dashed line 21, a temperature sensor 18 responds to the temperature of tube 14, which is representative of the fluid temperature inside tube 14. Sensor 18 could be an off the shelf resistive temperature device (RTD) that changes resistance in a linear relationship to temperature. The output of sensor 12, which represents the resonant frequency of tube 14 or a harmonic thereof, including the fluid contained therein, in the selected mode, and the output of external temperature sensor 18 are coupled to the inputs of a microprocessor 22, which is programmed to calculate the density of the fluid contained within tube 14. The calculated density can be read from a display 24.

Alternatively, the invention could be used to measure the density of a static fluid, i.e., a non-flowing fluid or the flow rate of fluid in a fluid system, as in a Coriolis meter.

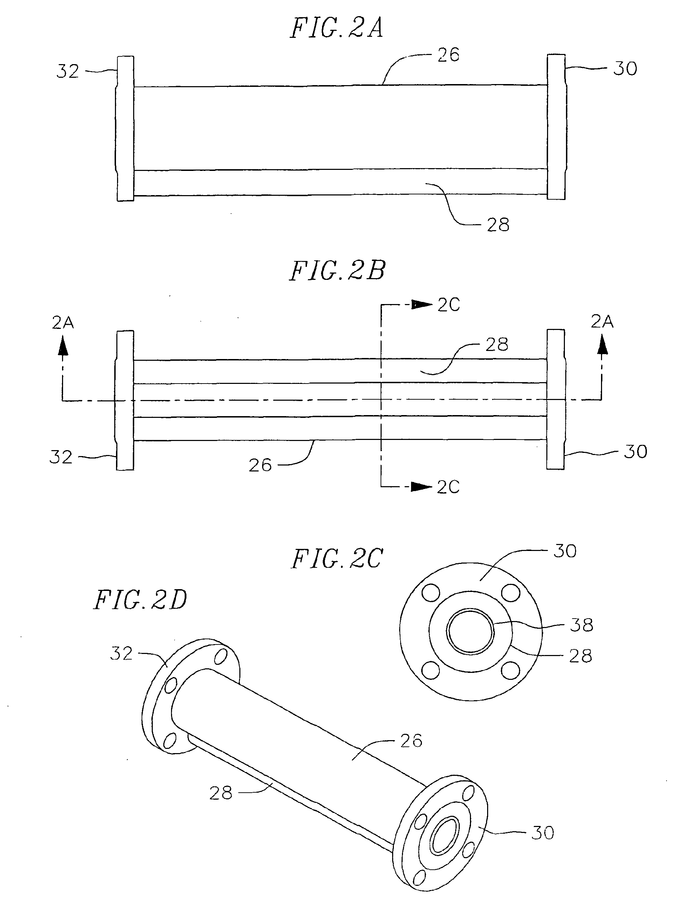

FIGS. 2A to 2D, show the densimeter in more detail. A sheath 26 surrounds vibrating tube 14 (not shown). A housing 28 is attached to the outside of sheath 26, for example by welding. Sheath 26, tube 14, and housing 28 are joined to connecting flanges 30 and 32, for example by welding.

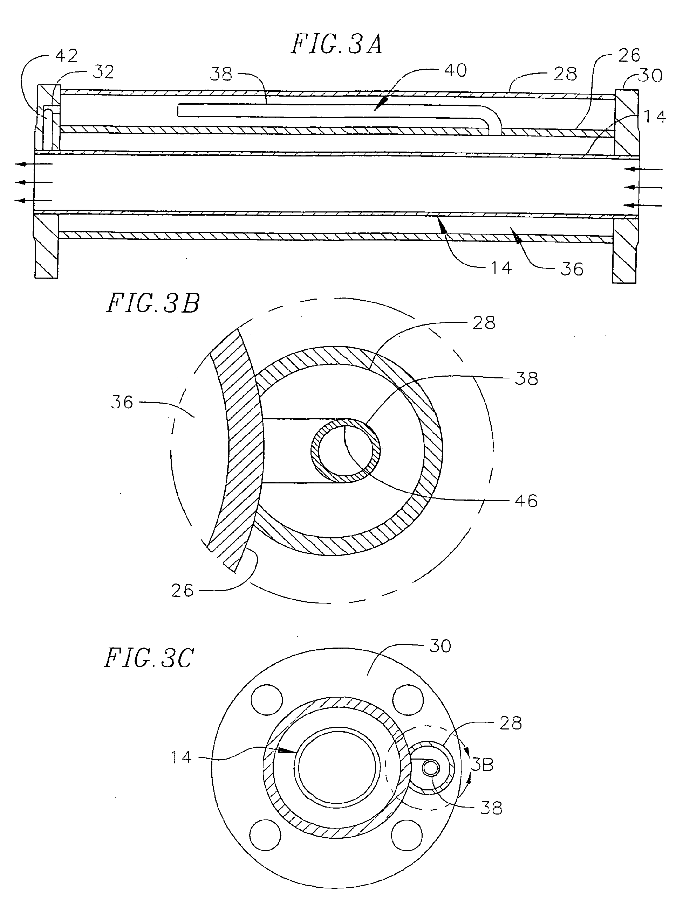

In FIGS. 3A to 3C, vibrating tube 14 is connected to a fluid system such as used in chemical plants, pipe lines, or food processing. A fluid whose density is to be measured flows through tube 14. Sheath 26 surrounds tube 14. Generally, sheath 26 has a thicker wall than tube 14 so it does not expand and contract appreciably with the pressure changes in tube 14. Sheath 26 and tube 14 form a cavity 36 between them. The electronics shown in FIG. 1, namely the sonic driver, vibration sensor, amplifier, and delay circuit, are located in cavity 36. Housing 28 is disposed around a pressure compensating element 38. Pressure compensating element 38 has a chamber 40 in fluid communication with cavity 36. In this embodiment pressure compensating element 38 takes the form of a hollow elastic cylinder. The inside of the cylinder serves as a first pressure responsive surface and the outside of the cylinder serves as a second pressure responsive surface.. Cavity 36 and chamber 40 are charged with a fixed amount of a fluid that is preferably relatively incompressible and electrically non conductive to protect the electronics. This fluid could also have other properties, such as chemical inertness, depending upon the nature of the fluid system. As a result, chamber 40 is at the same pressure as the interior of tube 14 and the pressure in tube 14 bears against the first surface. A passage 42 formed in flange 32 connects the inside of tube 14 to the interior of housing 28. As a result, the interior of housing 28 is at the same pressure as the interior of tube 14 and the pressure of tube 14 bears against the second surface.

As shown best in FIGS. 3B and 3C, housing 28 has a portion cut out of its circumference in this embodiment to facilitate attachment to sheath 26 as for example by welding and element 38 is a conduit in axial alignment with housing 28. Element 28 is made of an elastic material such neoprene with enough rigidity to support itself in a horizontal orientation. The first surface of element 38 is identified by the reference numeral 44 and the second surface of element 28 is identified by the reference numeral 46. Element 38 provides an elastic barrier that separates the fluid whose density is being measured and the fluid in cavity 36 and chamber 40 so the fluids can be different. This permits use of electronics that may be damaged by the fluid whose density is being measured If such damage is not a concern, housing 28, element 38, and passage 42 can be eliminated and the interior of sheath 26 can be open to the fluid flow in tube 14 so the fluid in sheath 26 compensates for pressure changes in tube 14.

In operation, when the pressure in tube 14 rises, the pressure inside housing 28 also rises. As a result, the pressure increase inside tube 14 bears on first surface 44 and is transmitted thereby to second surface 46. This increases the pressure in cavity 36 to compensate for the pressure rise in tube 14 and relieve stresses in the wall of tube 14.

Similarly, when the pressure in tube 14 drops, the pressure inside housing 28 also drops. As a result, the pressure decrease inside tube 14 bears on first surface 44 and is transmitted thereby to second surface 46. This decreases the pressure in cavity 36 to compensate for the pressure drop in tube 14 and relieve stresses in the wall of tube 14.

Sheath 26 and housing 28 are part of the spring mass system along with tube 14. But their spring constants being unvarying, their effect on the resonant frequency can be calibrated.

In summary, the described pressure compensating element changes the pressure in cavity 36 to match the pressure changes in tube 14.

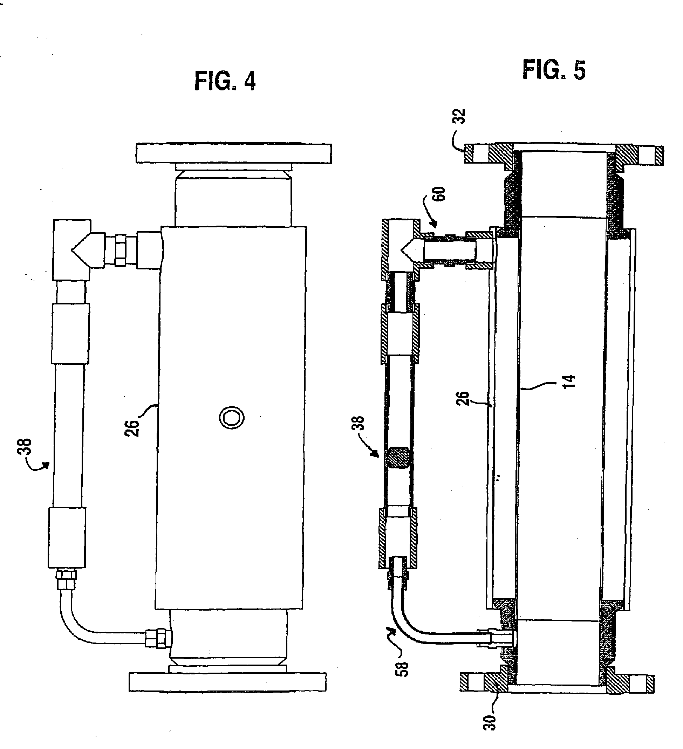

FIGS. 4 to 7 show alternative embodiments of the invention.

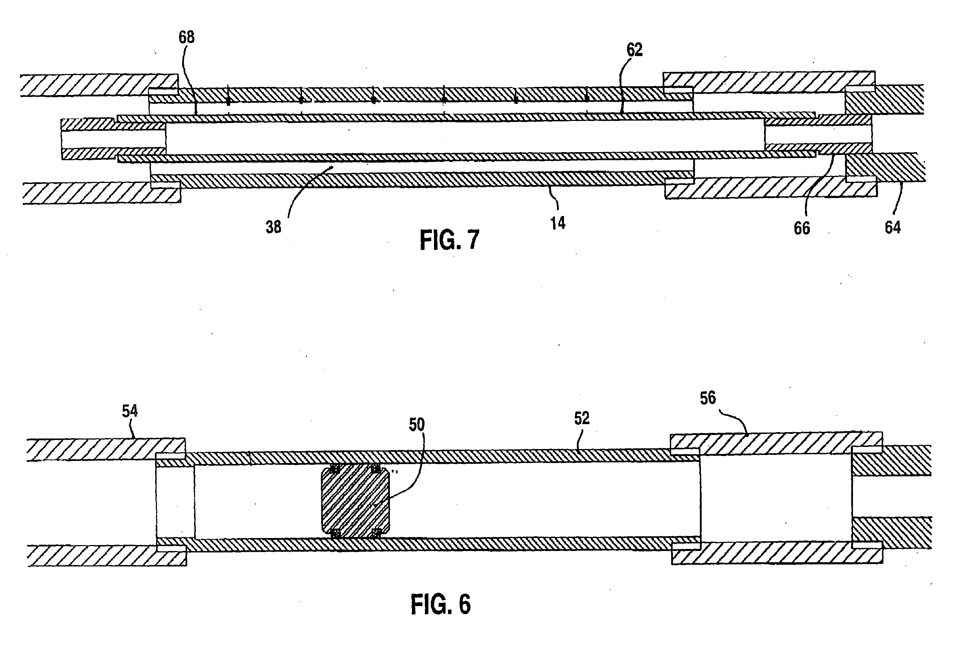

FIG. 4 shows a side elevation view of one embodiment and FIG. 5 shows a side sectional view of this embodiment. In this embodiment, pressure compensating element 38 is a displaceable piston 50 that moves inside a tube 52 as shown in FIG. 6. An end 54 of tube 52 is connected to the interior of vibrating tube 14 by a fitting 58 so the corresponding side of piston is exposed to the pressure in vibrating tube 14. Thus, this pressure is transmitted to the interior surface of vibrating tube 14. An end 56 of tube 52 is connected to the space between vibrating tube 14 and sheath 26 by a fitting 60 so the corresponding side of piston 50 is exposed to the pressure around vibrating tube 14. Thus, this pressure is transmitted to the exterior surface of vibrating tube 14 to balance (equalize) the pressure on both sides of vibrating tube 14 and the resonant frequency of vibrating tube 14 remains unchanged.

FIG. 7 shows alternative embodiment in which pressure compensating element 38 is flexible tube 62 disposed inside vibrating tube 14. Flexible tube 62 lies in the flow path of the fluid being measured in the flow system.. An end 64 of flexible tube 62 is directly connected to the flow system by a fitting 66. An end 68 of flexible tube 62 is supported by a spider 70 or the like to hold end 68 in alignment with vibrating tube 14 and place the fluid being measured in fluid communication with the space between vibrating tube 14 and flexible tube 68. As a result, the same pressure is exerted on both sides of vibrating tube 14 and the resonant frequency of vibrating tube 14 remains unchanged.

The described embodiment of the invention is only considered to be preferred and illustrative of the inventive concept; the scope of the invention is not to be restricted to such embodiment. Various and numerous other arrangements may be devised by one skilled in the art without departing from the spirit and scope of this invention. For example, the invention can be practiced with any similar device that has two pressure responsive surfaces, for example, a piston, a membrane, or a thin walled bellows. Further, although it is convenient for the pressure compensating element, e.g., housing 28 and chamber 40, to be physically attached to vibrating tube 14, it could be free standing or attached to another piece of equipment and connected to sheath 26 by one fluid line and to cavity 36 by another fluid line. Further the invention can also be used in a densimeter that measures stationary fluid.

## Claims

1. Apparatus for measuring fluid density comprising:
a tube disposed in a fluid system;
means for inducing vibrations in the tube;
a sheath around the tube, the sheath and the tube forming a cavity;
a fixed amount of fluid filling the cavity;
a housing;
a pressure compensating element in the housing, the pressure compensating element having a first pressure responsive surface in fluid communication with the cavity and a second pressure responsive surface in communication with the interior of the housing; and
a passage extending between the interior of the tube and the interior of the housing.

2. The apparatus of claim 1, in which the tube has a thinner wall than the sheath.

3. The apparatus of claim 2, in which the housing is attached to the outside of the sheath.

4. The apparatus of claim 3, in which the housing and the pressure compensating element extend parallel to the length of the sheath.

5. The apparatus of claim 4, in which the housing is cylindrical, the pressure compensating element is an elastic conduit in axial alignment with the housing, the first surface is the inside surface of the pressure compensating element, and the second surface is the outside surface of the pressure compensating element.

6. The apparatus of claim 5, in which the housing and the pressure compensating element are horizontally oriented and the pressure compensating element is sufficiently rigid to support itself.

7. The apparatus of claim 5, in which the tube has connecting flanges at its ends, the sheath and the housing are joined to the connecting flanges, and the conduit is formed in one of the connecting flanges.

8. The apparatus of claim 6, in which the fluid is incompressible.

9. The apparatus of claim 6, in which the fluid is chemically inert

10. The apparatus of claim 6, in which the fluid is electrically non-conducting.

11. A method for compensating for line pressure changes in a densimeter that has a vibrating tube to sense density, the method comprising:
forming a cavity around the tube;
forming chamber;
forming a variable pressure dependent volume in the chamber;
exposing the volume to the cavity so the volume reflects the pressure in the cavity; and
exposing the chamber to the tube 14 so the chamber reflects the pressure in the tube 14.
